# EUROPEAN PATENT SPECIFICATION

(11) **EP 3 173 642 B1**
(45) Date of publication and mention of the grant of the patent: **18.07.2018**
(21) Application number: 15382592.2
(22) Date of filing: 27.11.2015
(51) Int. Cl.: F16C 33/78, F16C 33/66, H02K 7/18, F16C 19/38

(54) **WIND TURBINE GENERATOR WITH BEARING SYSTEM AND SEAL**
WINDENERGIEANLAGE MIT LAGERANORDNUNG UND DICHTUNGSELEMENT
GENERATEUR DE TURBINE EOLIENNE AVEC ROULEMENT ET ELEMENT D'ETANCHEITE

(43) Date of publication of application: 31.05.2017
(73) Proprietor: GE Renewable Technologies Wind B.V., 4817 PA Breda (NL)
(72) Inventor: CLARAMUNT ESTECHA, Santiago, 08003 BARCELONA (ES); CALOVI, Stefano, 08015 BARCELONA (ES)
(74) Representative: ZBM Patents - Zea, Barlocci & Markvardsen

(56) References cited:
- EP-A1- 2 096 303
- EP-A1- 2 172 665
- EP-A1- 2 233 760
- EP-A1- 2 620 643
- EP-A2- 2 657 556
- WO-A1-02/057624
- WO-A1-2012/135254
- DE-A1-102012 212 792

## Description

The present disclosure relates to wind turbine generators including wind turbine rotatable assemblies.

### BACKGROUND

Rotatable parts in wind turbine applications involve high radial and axial loadings. In such applications, reduced or no slip is required between the rotatable parts to minimize wear over long periods of service. For this purpose, specific bearing systems are commonly used arranged between the rotatable parts. An example of wind turbine rotatable parts is the rotor and stator of the electrical generator.

In such wind turbine applications, the use of bearing systems comprising tapered roller bearings is known in the art, such as for example the bearing system disclosed in EP2360383. The tapered roller bearings are arranged in several rows, typically in pairs of rows such as for example two or four rows, such that a compact structure is obtained for effectively handling axial and radial loads while providing high levels of stiffness.

Associated with such wind turbine bearing systems is a lubricant chamber. The lubricant chamber is typically formed around the roller bearings so that they are suitably greased in order to reduce friction and prevent corrosion.

The lubricant chamber is conveniently sealed through suitable seal. Examples of a suitable seal is labyrinth seals, rubber lips, and the like.

In standard configurations, the seal is usually arranged between a bearing outer ring and a bearing inner ring. The bearing inner ring in this case usually comprises two rings each supporting a bearing race. The seal is usually fixed to the rotating bearing outer ring and further arranged to slidingly contact the inner bearing outer ring so as to form a sealed chamber between both rings.

As used herein, a bearing outer ring refers to that having diameter larger than that of the bearing inner ring.

EP2620643 relates to a wind turbine bearing system comprising first and second bearing rings, first and second seal carriers, and a roller element. A first turbine element can be coupled to a first surface of the first bearing ring. The first seal carrier is mounted to the first bearing ring such that the first seal carrier can be arranged between the first bearing ring and the first turbine element. The first seal carrier is suitable for electrically isolates the first bearing ring to the first turbine element.

EP2096303 discloses a wind turbine bearing supporting a hub carrying rotor blades. The bearing comprises a rotational bearing race that is connected to the hub and a stationary bearing race, a lubrication area between the bearing races which area is confined at both ends by first seal rings sealing the gap between the rotational bearing race and stationary parts to form a lubrication barrier. A further seal ring is arranged in the lubrication are at a distance from the first seal ring in or near the gap to be sealed.

DE102012212792 also provides a wind turbine bearing arrangement. A roller bearing is interposed between a generator stator and a generator rotor. The roller bearing is sealed by a contactless seal such as a labyrinth seal arranged at both sides of the roller bearing. A sealing gap of fixed size is formed between a set of seal elements which is filled with fat or oil in the region of the interposed roller bearing.

EP2657556 refers to a system for supplying grease to mechanisms that support a wind turbine main shaft where blades are provided. Such system includes a discharge portion for discharging grease from a rolling bearing, a portion for measuring a discharge amount of grease, portion for setting a replenishing amount of grease, and a supply portion that automatically replenishes the rolling bearing with the set amount of grease.

WO2012135254 discloses a sealed bearing assembly comprisins stationary inner races and a rotating outer race and rows of rolling elements disposed therebetween and axially enclosed by seals supported on seal carriers secured to the rotating outer race. The seals have lips in sealing contact with an outer surface of each adjacent inner race. A lubrication passage is provided radially through the outer peripheral end of each of the bearing stationary inner races and intersects with a passage parallel to the bearing axis of rotation that opens into an outer chamber of the bearing. During operation, lubricant is circulated through the bearing assembly in two directions, and discharged into center and outer chambers.

The above bearing systems suffer from the disadvantage of high structural complexity, so there is a need for reducing the number of parts involved while still preventing the rings to be undesirably oversized.

### SUMMARY

A wind turbine generator has been developed according to claim 1 with which the above disadvantages are at least partially reduced while also providing advantageous effects. The present assembly has been shown to be an efficient solution for large electric generators in direct drive wind turbines.

The present wind turbine generator includes a rotatable assembly that comprises a first part, a second part and a third part.

The first part is a fixed part such as for example the stator of an electrical generator.

The second part is a rotatable part comprising a generator rotor.

The third part of the present wind turbine rotatable assembly comprises a wind turbine bearing system. The bearing system comprises at least one outer ring, at least one inner ring, and at least one bearing element. The at least one bearing element is arranged between the outer and inner rings. The bearing element may for example comprise one or more tapered roller bearings. Other bearings may of course be used.

The inner ring is associated with one of the first part and the second part and the outer ring is associated with the other of the first part and the second part. Thus, in one example the outer ring may be associated both with the bearing system and the second rotatable part.

A lubricant chamber is also provided intended to properly grease the bearing system in order to reduce friction and to prevent corrosion. The lubricant chamber may be formed, for example, between the first part and the bearing system. The lubricant chamber is conveniently sealed through a suitable seal.

According to the invention, the seal is directly attached to the electrical generator rotor for sealing the lubricant chamber. The seal is arranged between the second, rotatable part and the bearing system. In some examples, at least one cover may be also provided for at least partially covering the seal.

The seal may comprise at least one sealing element that is directly attached to the electrical generator rotor. Such sealing element may comprise, for example a rubber element. Other seals may be of course used to act as sealing element.

As used herein, the feature, not part of the invention, that the seal is part of the electrical generator rotor refers to an integral configuration of the seal with the electrical generator rotor. On the other hand, also as used herein, directly attached refers to a connection of the seal, or the sealing element (e.g. rubber element), to the electrical generator rotor that does not include any intervening parts. According to the invention, at least one outlet for the lubricant is further included. Such outlet is formed in the second part, that is, the electrical generator rotor, so that the lubricant comes out of the lubricant chamber.

The above described rotatable assembly advantageously allows the integration of seal especially in two row tapered roller bearings between a bearing ring and surrounding parts in a wind turbine. Advantageously, the electrical generator rotor acts as a sealing carrier and the lubricant outlet can be formed in the electrical generator rotor, sandwiched with surrounding parts. This results in a further important advantage relating to significant savings in material which has been found to have a cost impact of the order of around 10%.
The above rotatable assembly may find application especially in large generators as those used in direct-drive wind turbines and, for more particularly, in large permanent magnet generators.
Furthermore, the above rotatable assembly may find application in the wind turbine main bearing. Thus, the present disclosure also relates to wind turbines including the above described rotatable assembly, comprising a first part, a second part that can rotate relative to the first part, a bearing system arranged between said first and second parts and comprising one or more bearing elements, a lubricant chamber, and a seal that is part of or is directly attached to the second part for sealing said lubricant chamber wherein the first part is the main frame of the wind turbine and the second part is a wind turbine rotor, i.e. hub and blades.

Additional objects, advantages and features of examples of the present wind turbine generator will become apparent to those skilled in the art upon examination of the description, or may be learned by practice thereof.

### BRIEF DESCRIPTION OF THE DRAWINGS

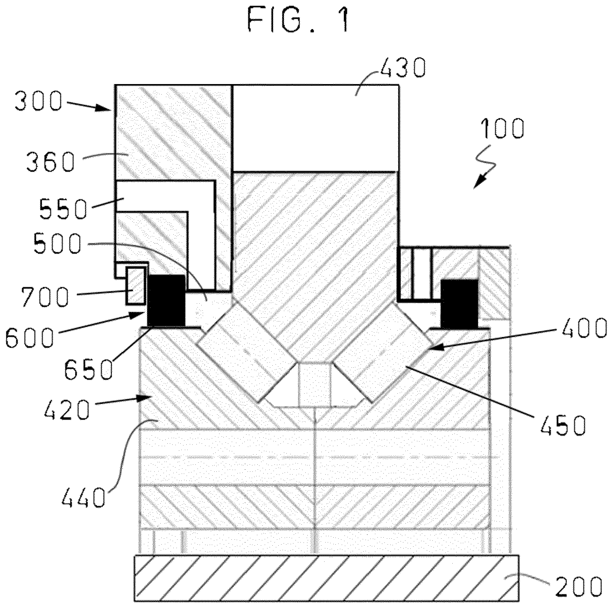

One example of the present wind turbine generator will be described in the following by way of non-limiting examples. The present example is given with reference to the appended drawing where a permanent magnet generator for a wind turbine is illustrated including the present rotatable assembly.

### DETAILED DESCRIPTION OF EXAMPLES

In the drawing, a permanent magnet generator for a wind turbine is shown comprising a rotatable assembly 100. The rotatable assembly 100 comprises a fixed, first part 200, a rotatable, second part 300 and a third part 400.

The fixed, first part 200 is associated with a stator of an electrical generator.

The rotatable, second part 300 is part of the rotor 360 of an electrical generator. The second part 300 can rotate relative to the fixed, first part 200.

The third part 400 comprises a wind turbine bearing system 420. The wind turbine bearing system 420 comprises an outer ring 430, an inner ring 440, and a bearing element 450 that is arranged between the outer and inner rings 430, 440. The wind turbine bearing system 420 allows rotation between the first and second parts 200, 300.

In general, the inner ring 440 is associated with one of the first, fixed part 200 and the second part 300 while the outer ring 430 is associated with the other of the first 200 part and the second part 300. In the particular example shown in the drawing, the inner ring 440 is associated with the first, fixed part 200, while the outer ring 430 is associated with the second part 300. Thus, the outer ring 430 is both associated with the second part 300 and the bearing element 450. In the example shown, the outer ring 430, which is part of the third part 400, is provided between the second part or rotor 300 and the bearing elements 450.

The bearing system 420 comprises a number of tapered roller bearings 450 arranged in fluid communication with a lubricant chamber 500. The lubricant chamber 500 is formed between the inner ring 440 of the bearing system 420 and the second part 300. An outlet 550 is formed in the second part 300 for the lubricant to come out of the lubricant chamber 500.

A seal 600 is provided for sealing the lubricant chamber 500. The seal 600 is arranged between the second, rotatable part 300 and the bearing system 420 and, more particularly, between the rotatable part 300 and the inner ring 440. They comprise a sealing element 650, such as a rubber element, that is directly attached to the second part 300 of the rotatable assembly 100. Thus, the seal 600 and the outlet 550 both belong to the electrical generator rotor 360. As a consequence, the second rotatable part 300 in the present rotatable assembly 100 does perform a sealing function as opposed to prior art assemblies in which said sealing function is achieved within the bearing system 420 itself. Due to the particular configuration of the present rotatable assembly 100, the electrical generator rotor 360 is the part of the wind turbine that performs the sealing function for the lubricant chamber 500.

The rubber element 650 is connected to the second part 300 with no intervening parts. It could be also possible that the rubber element 650 is formed integrally with the second part 300. A cover 700 is provided for covering the sealing element 650 of the seal 600. The cover 700, together with the lubricant chamber 500 and the seal 600 are part of the second part 300.

Although only a particular embodiment of the present wind turbine generator has been disclosed herein, it will be understood by those skilled in the art that other alternative examples and/or uses and obvious modifications and equivalents thereof are possible. The present disclosure thus covers all possible combinations of the particular example described herein so its scope should not be limited by said example but should be determined by the appended claims only.

## Claims

1. A generator for a wind turbine, the generator including a rotatable assembly (100) comprising:
- a fixed first part (200);
- a second, rotatable part (300) comprising a generator rotor (360) that can rotate relative to the first part (200);
- a third part comprising a bearing system (420) arranged between the first part (200) and the second part (300), the bearing system (420) comprising at least one bearing outer ring (430), at least one bearing inner ring (440) and at least one bearing element (450) arranged such that the inner ring (440) is associated with one of the first and second parts (200, 300) and the outer ring (430) is associated with the other of the first and second parts (200, 300),
- a lubricant chamber (500); and
- a seal (600) comprising at least one sealing element (650);
**characterized in that** the generator rotor (360) includes said sealing element (650) directly attached thereto for sealing the lubricant chamber (500) and **in that** at least one outlet (550) is also formed in the generator rotor (360) for the lubricant to come out of the lubricant chamber (500).

2. The generator according to claim 1, wherein the seal (600) is arranged between the second, rotatable part (300) and the bearing system (420).

3. The generator according to claim 1 or 2, wherein the sealing element (650) comprises a rubber element.

4. The generator according to any of the preceding claims, wherein it further includes at least one cover (700) for at least partially covering the seal (600).

5. The generator according to any of the preceding claims, wherein the bearing element comprises at least one tapered roller bearing (650).

6. The generator according to any of the preceding claims, wherein the lubricant chamber (500) is formed between the first part (200) and the second part (300).

7. The generator according to any of the preceding claims, wherein the first part is associated with a wind turbine main frame.

8. The generator according to any of the preceding claims, wherein the second part is associated with a wind turbine rotor hub.

## Patentansprüche

1. Ein Generator für eine Windturbine, wobei der Generator eine drehbare Anordnung (100) einschließt, die folgendes umfasst:
- einen festen ersten Teil (200);
- einen zweiten, drehbaren Teil (300) umfassend einen Generatorrotor (360), der bezüglich des ersten Teils (200) drehen kann;
- einen dritten Teil umfassend ein Lagersystem (420), das zwischen dem ersten Teil (200) und dem zweiten Teil (300) angeordnet ist, wobei das Lagersystem (420) mindestens einen äußeren Lagerring (430), mindestens einen inneren Lagerring (440) und mindestens ein Lagerelement (450) umfasst, die derart angeordnet sind, dass der innere Ring (440) mit einem der ersten und zweiten Teile (200, 400) verknüpft ist und der äußere Ring (430) mit dem anderen der ersten und zweiten Teile (200, 300) verknüpft ist,
- eine Schmiermittelkammer (500); und
- eine Dichtung (600) umfassend mindestens ein Dichtelement (650);
**dadurch gekennzeichnet, dass** der Generatorrotor (360) das Dichtelement (650) unmittelbar daran befestigt umfasst, um die Schmiermittelkammer (500) abzudichten und dadurch, dass ein Auslass (550) auch im Generatorrotor (360) gebildet ist, damit das Schmiermittel aus der Schmiermittelkammer (500) herausfließt.

2. Der Generator nach Anspruch 1, wobei die Dichtung (600) zwischen dem zweiten, drehbaren Teil (300) und dem Lagersystem (420) angeordnet ist.

3. Der Generator nach Anspruch 1 oder 2, wobei das Dichtelement (650) ein Gummielement umfasst.

4. Der Generator nach einem der vorhergehenden Ansprüche, wobei er weiterhin mindestens einen Deckel (700) umfasst, um mindestens teilweise die Dichtung (600) abzudecken.

5. Der Generator nach einem der vorhergehenden Ansprüche, wobei das Lagerelement mindestens ein verjüngtes Rollenlager (650) umfasst.

6. Der Generator nach einem der vorhergehenden Ansprüche, wobei die Schmiermittelkammer (500) zwischen dem ersten Teil (200) und dem zweiten Teil (300) gebildet ist.

7. Der Generator nach einem der vorhergehenden Ansprüche, wobei der erste Teil mit einem Windturbinenhauptrahmen verknüpft ist.

8. Der Generator nach einem der vorhergehenden Ansprüche, wobei der zweite Teil mit einer Windturbinenrotornabe verknüpft ist.

## Revendications

1. Un générateur pour une éolienne, le générateur incluant un ensemble pivotant (100) comprenant :
- une première partie fixe (200) ;
- une deuxième partie pivotante (300) comprenant un rotor de générateur (360) qui peut pivoter par rapport à la première partie (200) ;
- une troisième partie comprenant un système de roulements (420) disposé entre la première partie (200) et la deuxième partie (300), le système de roulements (420) comprenant au moins une bague extérieure de roulement (430), au moins une bague intérieure de roulement (440) et au moins un élément de roulement (450) disposés de façon que la bague intérieure (440) est associée avec une des parties première et deuxième (200, 300) et la bague extérieure (430) est associée avec l'autre des parties première et deuxième (200, 300),
- une chambre de lubrifiant (500) ; et
- un joint (600) comprenant au moins un élément d'étanchéité (650) ;
**caractérisé en ce que** le rotor de générateur (360) inclut ledit élément d'étanchéité (650) directement attaché à celui-ci pour le scellage de la chambre de lubrifiant (500) et **en ce qu'**au moins une sortie (550) est formée aussi dans le rotor de générateur (360) de manière à ce que le lubrifiant sorte de la chambre de lubrifiant (500).

2. Le générateur selon la revendication 1, dans lequel le joint (600) est disposé entre la deuxième partie pivotante (300) et le système de roulements (420).

3. Le générateur selon la revendication 1 ou 2, dans lequel l'élément d'étanchéité (650) comprend un élément en caoutchouc.

4. Le générateur selon l'une quelconque des revendications précédentes, dans lequel il inclut en outre au moins un couvercle (700) four couvrir au moins en partie le joint (600).

5. Le générateur selon l'une quelconque des revendications précédentes, dans lequel l'élément de roulement comprend au moins un roulement à rouleaux effilé (650).

6. Le générateur selon l'une quelconque des revendications précédentes, dans lequel la chambre de lubrifiant (500) est formée entre la première partie (200) et la deuxième partie (300).

7. Le générateur selon l'une quelconque des revendications précédentes, dans lequel la première partie est associée avec un châssis principal de l'éolienne.

8. Le générateur selon l'une quelconque des revendications précédentes, dans lequel la deuxième partie est associée avec un moyeu de rotor de l'éolienne.
